# EUROPEAN PATENT APPLICATION

(11) **EP 4 614 260 A1**
(43) Date of publication of application: **10.09.2025**
(21) Application number: 25157060.2
(22) Date of filing: 11.02.2025
(51) Int. Cl.: G05B 19/418, G06T 7/00

(54) **QUALITY CONTROL OF PACKAGES PRODUCED IN A PACKAGING MACHINE**

(30) Priority: 28.02.2024 IT 202400004243
(71) Applicant: Tetra Laval Holdings & Finance S.A., 1009 Pully (CH)
(72) Inventor: Verasani, Mattia, 41123 Modena (IT); Maltoni, Luca, 41123 Modena (IT); Gherardi, GianMarco, 41123 Modena (IT); Arena, Marco, 41123 Modena (IT); Angioloni, Luca, 41123 Modena (IT)
(74) Representative: Tetra Pak Patent Attorneys

(57) **Abstract**

The present invention relates to a quality control apparatus for quality control of packages produced in specific packaging machine of a certain model, the quality control apparatus comprising: a memory storing a pre-trained machine learning model being trained to recognize packages produced in a generic packaging machine of the certain model to pass a quality control and to recognize a number of known defects on packages produced in the generic packaging machine; and circuitry configured to execute: an image obtaining function configured to obtain images depicting packages produced in the specific packaging machine; an irregularity identification function configured to identify an irregularity on packages produced in the specific packaging machine, by inputting the images into the pre-trained machine learning model; an irregularity classifying function configured to classify a package exhibiting the irregularity as either a package passing the quality control or a defect package; a fine-tuning function configured to fine-tune the pre-trained machine learning model to additionally recognize packages produced in the specific packaging machine of the certain model and exhibiting the irregularity as either being a package passing the quality control or being a defect package depending on a result from the irregularity classifying function, thereby generating a specific machine learning model specific to the specific packaging machine of the certain model to be used for quality control of packages produced in the specific packaging machine; and a quality control function configured to perform quality control on packages produced by the specific packaging machine using the specific machine learning model.

## Description

### Technical field

The present invention relates to the field of packaging technology. More particularly, it is related to a methods and apparatuses for quality control of packages produced in a packaging machine as well as a food production system thereof.

### Background of the invention

Within the food industry today, the food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life. However, the packaging material is not the only thing that is important in the package. The package needs also to be sealed properly. Any damages to the packaging material or errors in the sealing can result in a breach of the protective environment. In a roll-fed packaging system for instance, the packages are made by forming a longitudinal sealing along an overlap between two ends of the packaging material such that a tube is formed. Thereafter, the packages can be formed from the tube by making a top and bottom transversal sealing. According to another example, a blank-fed packaging system may be used for producing packages. In a is blank-fed packaging system one or more seals are made upon forming the packages.

There are thus many aspects of the food package which are important. Ensuring the quality of food packages produced in packaging machines is not an easy task. Today, a common way of doing this is to evaluate batches of the finished products manually. In addition to visually examining the exterior of the package, this also means opening packages to assess the sealing formed on the inside of the package. However, this is a tedious task which also leads to waste of product. Further, to ensure the quality, large quantities of packages has to be assessed. It is therefore a need for an improved way of quality control of packages produced in packaging machines.

### Summary of the invention

The herein disclosed technology seeks to at least partly mitigate, alleviate or eliminate one or more of the above-mentioned deficiencies and disadvantages in the prior art. In particular, it is an object to provide a method and apparatus for quality control of packages produced in a packaging machine.

The inventors of the present inventive concept have realized a new and improved way of evaluating the quality of packages utilizing machine learning. Especially, an improved method for generating a specific machine learning model configured to perform a quality control of packages being produced in a specific packaging machine of a certain model has been invented. The present inventive concept further provides for continuously monitoring of the packages such that a higher confidence in the package quality can be achieved, compared to today's methods of evaluating samples manually. It further allows actions to be taken at an early stage, which can lead to a reduction of wasted product.

Various aspects and embodiments of the disclosed invention are defined below and in the accompanying independent and dependent claims.

According to a first aspect, there is provided a quality control apparatus for quality control of packages produced in specific packaging machine of a certain model. The quality control apparatus comprising: a memory and circuitry. The memory is storing a pre-trained machine learning model being trained to recognize packages produced in a generic packaging machine of the certain model to pass a quality control and to recognize a number of known defects on packages produced in the generic packaging machine. The circuitry is configured to execute: an image obtaining function configured to, from an image capturing device, obtain images depicting packages produced in the specific packaging machine; an irregularity identification function configured to identify an irregularity on packages produced in the specific packaging machine, by inputting the images into the pre-trained machine learning model; an irregularity classifying function configured to classify a package exhibiting the irregularity as either a package passing the quality control or a defect package; a fine-tuning function configured to fine-tune the pre-trained machine learning model to additionally recognize packages produced in the specific packaging machine of the certain model and exhibiting the irregularity as either being a package passing the quality control or being a defect package depending on a result from the irregularity classifying function, thereby generating a specific machine learning model specific to the specific packaging machine of the certain model to be used for quality control of packages produced in the specific packaging machine; and a quality control function configured to perform quality control on packages produced by the specific packaging machine using the specific machine learning model.

By the wording "quality control" it is herein meant an evaluation of one or more quality aspects of the package. A quality aspect may be related to food safety, such as looking for any damages to the package or package material or deficiency or anomaly in the forming of the package (e.g. in sealing or folding the package). Another quality aspect may be related to aesthetics of the package, such as looking for any deformations in the package (which also could be related to food safety) or misprints/misalignment in the décor of the package.

By the wording "produced" as in "produced in a specific/generic packaging machine", it is herein meant that the package either has been produced, or is being produced in the specific/generic packaging machine.

By the wording "of a certain model" as in "a specific/generic packaging machine of a certain model", it is herein meant that the packaging machine belongs to a certain model of packaging machines.

By the wording "specific" as in both "specific machine learning model" and "specific packaging machine", it is herein meant that the machine learning model/packaging machine is a specific one among a plurality of similar machine learning models/packaging machines. In the case of a specific packaging machine, this is one packaging machine installed at a site where packages are produced. The specific machine learning model is a machine learning model being specifically generated to perform quality control of packages produced in the specific packaging machine.

By the wording "generic" as in "generic packaging machine", it is herein meant that the packaging machine is a generic packaging machine, i.e. a packing machine having general functionality of packaging machines belong to the certain model.

By the wording "irregularity" as in "an irregularity on packages produced", it is herein meant that the irregularity being an feature on the packages previously being unknown to the machine learning model. Such an irregularity may either be a defect on the packages or a feature being ok for the packages to pass the quality control.

Due to specific circumstances at each installation of a packaging machine of a certain model different type of more or less unique deficiencies may appear of packages produced by a specific packaging machine. To mitigate this, the herein disclosed generation of a specific machine learning model can be utilized. The wording "fine-tuning" is herein meant to be understood as training the machine learning model to additionally recognize a previously unknown features/deficiency of packages produced by the specific packaging machine. Hence, after being fine-tuned the machine learning model will in addition to previous training also recognize the previously unknown features/deficiency of packages produced by the specific packaging machine. A possible associated advantage may thus be that a continuous learning system of the machine learning model which may be able to identify new or never before seen defects in the packages being specific for that specific packaging machine. The quality control apparatus allow a "generally" trained machine learning model to be deployed as a starting point in different specific packaging machines, the machine learning model may then learn (i.e. be fine-tuned) for the specific packaging machine it is deployed in to reach a desired performance. This may be advantageous in that it can simplify the training process, as the machine learning model need not to be trained for its unique application, which would require time and computational resources, as well as collecting a lot of data unique for each situation. Instead, the "generally" machine learning model can be trained once using the same training data, before it is deployed in a packaging machine where it can be fine-tuned for the specific installation.

The irregularity classifying function may be configured to generate a classifying task to be sent to a user group and to receive a classifying result from the user group.

The classifying task may comprise one or more images of packages with the first type of irregularity.

The classifying task may further comprise one or more settings of the specific packaging machine upon producing the packages with the first type of irregularity.

The irregularity identification function may further be configured to aggregate a plurality of images depicting packages exhibiting the first type of irregularity into a first group of images, and wherein the irregularity classifying function is configured to generate the classifying task comprising the first group of images.

The irregularity identification function may further be configured to aggregate a plurality of images depicting packages exhibiting the first type of irregularity into a first group of images, and wherein the fine-tuning function is configured to fine-tune the pre-trained machine learning model using the first group of images.

According to a second aspect, there is provided a food production system. The food production system comprising: a specific packaging machine of a certain model configured to produce packages; an image capturing device configured to capture images depicting at least a portion of packages produced in the specific packaging machine; and a quality control apparatus according to the first aspect.

The above mentioned features of the quality control apparatus, when applicable, apply to this second aspect as well. In order to avoid undue repetition, reference is made to the above.

According to a third aspect a computer implemented method for generating a specific machine learning model configured to perform a quality control of packages produced in a specific packaging machine of a certain model is provided. The method comprising: obtaining, from an image capturing device, images depicting packages produced in the specific packaging machine of the certain model; identifying a first type of irregularity on packages produced in the specific packaging machine of the certain model, by inputting the images into a pre-trained machine learning model being trained to recognize packages produced in a generic packaging machine of the certain model to pass a quality control and to recognize a number of known defects on packages; obtaining a classification of a package exhibiting the first type of irregularity as either a package passing the quality control or a defect package; and finetuning the pre-trained machine learning model to additionally recognize packages produced in the specific packaging machine and exhibiting the first type of irregularity as either being a package passing the quality control or being a defect package depending on the result from the classification, thereby generating the specific machine learning model.

The obtaining a classification may be performed by sending a classifying task to a user group and receiving a classifying result from the user group.

The classifying task may comprise one or more images of packages with the first type of irregularity.

The classifying task may further comprise one or more settings of the specific packaging machine upon producing the packages with the first type of irregularity.

The method may further comprise aggregating a plurality of images depicting packages exhibiting the first type of irregularity into a first group of images, wherein the classifying and/or training is/are performed using the first group of images.

The method may further comprise, subsequently to the finetuning the pre-trained machine learning model to additionally recognize packages produced in the specific packaging machine and exhibiting the first type of irregularity: obtaining, from the image capturing device, additional images depicting packages produced in the specific packaging machine of the certain model; identifying a second type of irregularity on packages produced in the specific packaging machine, by inputting the additional images into the specific machine learning model; obtaining a classification of a package exhibiting the second type of irregularity as either a package passing the quality control or a defect package; and finetuning the specific machine learning model to additionally recognize packages produced in the specific packaging machine and exhibiting the second type of irregularity as either being a package passing the quality control or being a defect package depending on the result from the classifying, thereby updating the specific machine learning model. The classification of a package exhibiting the second type of irregularity may be made in similar manner as the classification of a package exhibiting the first type of irregularity.

The above mentioned features of the quality control apparatus, when applicable, apply to this third aspect as well. In order to avoid undue repetition, reference is made to the above.

According to a fourth aspect, there is provided a non-transitory computer-readable storage medium. The non-transitory computer-readable storage medium stores one or more programs configured to be executed by one or more processors of a processing system, the one or more programs comprising instructions for performing the method according to the third aspect.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates, by way of example, a food production system comprising a quality control apparatus.
Figure 2 schematically illustrates the quality control apparatus of the food production system of Figure 1 in more detail.
Figure 3 is a flow chart illustrating the steps of a method for generating a specific machine learning model configured to perform a quality control of packages produced in a specific packaging machine.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors.

It is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

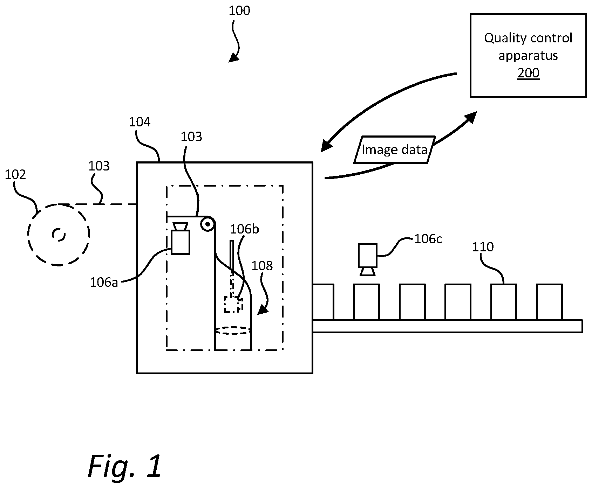

A method for generating a specific machine learning model configured to perform a quality control of packages produced in a specific packaging machine of a certain model, as well as a quality control apparatus making use of such a specific machine learning model and food production system comprising such a quality control apparatus will now be described with reference to Fig. 1 to Fig. 3.

Fig. 1 generally illustrates, by way of example, a food production system 100. The dashed lines indicates parts which are optional. The food production system 100 may be seen as any type of food processing line for filling and packaging food products.

The food production system 100 comprises a packaging machine 104. The packaging machine 104 may be a roll-fed packaging machine used for producing packages. More specifically, the packaging machine 104 may be used for packaging liquid food products in carton-based packages. Already in the 1940s this type of packaging machines was introduced by Tetra Pak^{™} and it is today a well-known approach for packaging milk and other liquid food products in a safe and cost-efficient manner. The general approach can also be used for non-liquid food products, such as potato crisps. Alternatively, the packaging machine 104 may be a blank-fed packaging machine in which the package material is provided as blanks to the packaging machine 104. The packaging material is often printed and prepared in packaging material production centers, also referred to as converting factories, and is shipped to a site where the packaging machine 104 is placed, e.g. a dairy. For a roll-fed packaging machine 104 the packaging material is loaded onto a reel 102 before being transported. After arriving at the site, the reel 102 is placed in the packaging machine 104, or fed into the packaging machine 104 as illustrated in herein. In case of the packaging machine 104 being a black-fed packaging machine, the package material is provided as blanks to the packaging machine 104. Typically the package material comprising a carton layer and at least one plastic layer.

Alternative to the food production system 100 comprising a packaging machine 104 in the form of a black-fed or roll-fed packaging machine, the food production system 100 may comprise a PET bottling system. Hence, the packaging machine 104 may be a PET bottling system.

In case the packaging machine 104 being roll-fed packaging machine, during production a web 103 of packaging material is fed from the reel 102 through the packaging machine 104. Even though not illustrated in Fig. 1, the packaging material may pass through a sterilization device, e.g. a hydrogen peroxide bath or an LVEB (Low-Voltage Electron Beam) station, for ensuring that the web 103 is free from unwanted microorganisms. Before providing the food product, a tube 108 can be formed from the web 103 by forming a longitudinal sealing. The longitudinal sealing is formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube. The food product can be fed into the tube 108 via a filling pipe (not shown) and a valve (not shown) may be used for regulating a flow through the filling pipe. A lower end of the tube 108 can be fed into a folding device (not shown) in which a transversal sealing is made, the tube 108 is folded according to folding lines, also referred to as weakening lines, and cut off such that packages 110 can be formed.

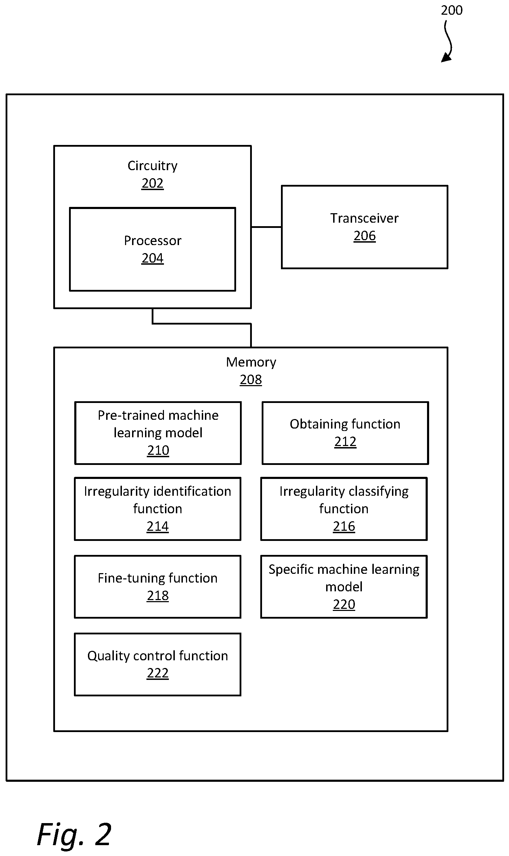

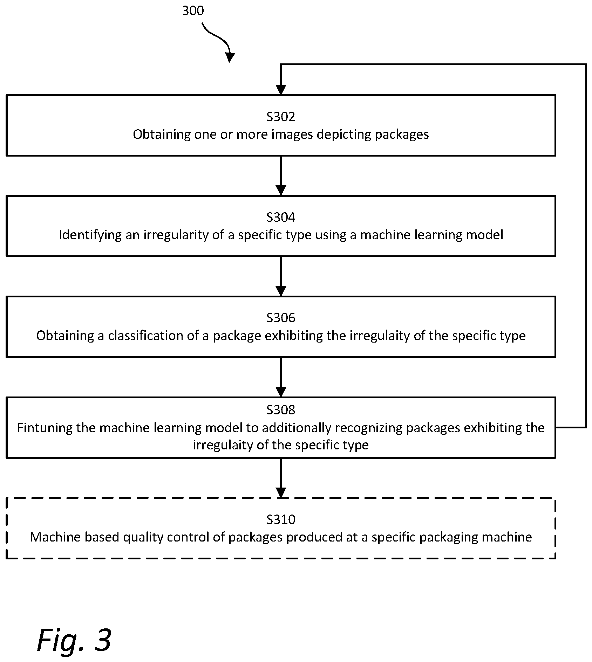

The food production system 100 further comprises an image capturing device 106a-c. The image capturing device 106a-c is configured to capture images depicting at least a portion of a package produced in the packaging machine 104. The image capturing device 106a-c may be arranged in the packaging machine 104. However, as readily understood by the skilled person, the image capturing device 106a-c may be arranged outside of the packaging machine 104 as well. In the illustrated example, a first image capturing device 106a, a second image capturing device 106b and a third image capturing device 106a 106c are illustrated. These should merely be seen as non-limiting examples for illustrating that images depicting the packages can be captured at different stages of the production process. For example, the first image capturing device 106a shows an example where images are captured of the package in the form of the web 103 of packaging material, i.e. prior to being formed into the tube 108. Further, the second image capturing device 106b shows an example where images are captured from inside of the tube 108, i.e. of a longitudinal sealing. Thus, the image capturing device may be arranged inside the tube 108 (as indicated by the dash-dot pattern). Further yet, the third image capturing device 306c shows an example where images are captured of a finished package 110 (i.e. a package which has been filled, sealed and folded). The food production system 100 may comprise one or more image capturing devices (e.g. any one of the first, second and third image capturing devices 106a-c) arranged at different places of the packaging machine 104. The image capturing device 106a-c may be any camera or other image capturing device suitable for capturing images that can be used for either generating a specific machine learning model configured to perform a quality control of packages produced in the specific packaging machine 104 or used as input into such a generated specific machine learning model. The generation of such a specific machine learning model and the used thereof to perform quality control of produced packages will be discussed in more detail below in connection with Figures 2 and 3. The image capturing device 106a-c may comprise a light source adapted to illuminate the portion of the package which the image is captured of. The light source may use visible light, infrared, IR, light, ultraviolet, UV, light, or any combination thereof.

The food production system 100 further comprises a quality control apparatus 200 for performing quality control of packages produced in the packaging machine 104. The quality control apparatus 200 will be discussed in more detail in connection with Fig. 2. The quality control apparatus 200 may be a separate unit from the packaging machine 104 and communicatively connected thereto. Alternatively, the quality control apparatus 200 may be an integral unit of the packaging machine 104, either as part of the control system of the packaging machine 104 or communicatively connected thereto. The quality control apparatus 200 can obtain images from the first, second and/or third image capturing devices 106a-c. Hence, the quality control apparatus 200 can obtain images depicting at least a portion of packages produced at the packaging machine 104. Herein, the quality control apparatus 200 receives the image from the image capturing device 306a-c through any suitable communication protocol. Optionally, identification data, ID, of the package associated with a specific image may also be received. The quality control apparatus 200 may transmit a determined action to be performed to the packaging machine 104. Optionally, the quality control apparatus 200 transmits updated settings to the packaging machine 104.

The food production system 100 belong to a certain model of food production systems. That is, typically a number of food production systems 100 of a certain model are installed at different production sites. One specific production site may further comprise a plurality of food production systems of the same model. Specifically, the packaging machine 104 belong to a certain model of packaging machines. That is, typically a number of packaging machines 104 of a certain model are installed at different production sites. One specific production site may further comprise a plurality of packaging machines of the same model. All packaging machines 104 of a certain model share most of their features. A packaging machine having these general features will herein been referred to a generic packaging machine of the certain model. Hence, with a generic packaging machine, it is herein meant that the packaging machine has general functionality of packaging machines belong to the certain model. Such a generic packaging machine may for example be installed at a test site of the manufacturer of the packaging machines of the certain model. The generic packaging machine may be used to perform testing and training on. For example training of a machine learning model used for performing quality control on packages being produced by a packaging machine 104 of the certain model. Further, each packaging machine 104 of a certain model installed at a production site typically comprises some unique features. This may be due to conditions at the installation site. Each such packaging machine being installed at a production site will herein been referred to a specific packaging machine of the certain model.

As readily understood by the person skilled in the art, the food production system 100 may comprise additional components not disclosed in Fig. 1 or discussed herein. For example, the food production system 100 typically comprises a filling machine configured to fill the packages with food, such as a diary product, juice, etc. The food production system 100 may further comprise a package reject unit. The package reject unit may be configured to either keep or discard packages based on a quality assessment made at the quality control apparatus 200. Any rejected packages may be collected by a recycling unit for recycling the product of the rejected packages. The accepted packages may be sent to an end station of the food production system 100 where they can be collected and transported away, e.g. to a warehouse.

Fig. 2 is a more detailed schematic illustration of the quality control apparatus 200. The quality control apparatus 200 is configured to perform quality control of packages produced in a packaging machine 104. In addition, the quality control apparatus 200 is configured to generate a specific machine learning model to be used in quality control of packages. The specific machine learning model being specific in that it is uniquely generated for a specific packaging machine 104. As discussed above, each specific packaging machine 104 of a certain model have a number of general features being generic for a generic packaging machine of the certain model. Further, as also being discussed above, each specific packaging machine 104 of a certain model have a number of specific features being unique for that specific packaging machine of the certain model. The generation of the specific machine learning model being specific for a specific packaging machine 104 will be discussed in more detail below.

The quality control apparatus 200 may be provided as an integral part of the specific packaging machine 104. More specifically, the quality control apparatus 200 may be part of a control system of the specific packaging machine 104. Alternatively, the quality control apparatus 200 may be provided externally to the specific packaging machine 104. In such case, the quality control apparatus 200 may be communicatively connected to the specific packaging machine 104.

The quality control apparatus 200 comprises circuitry 202. The circuitry 202 may physically comprise one single circuitry device. Alternatively, the circuitry 202 may be distributed over several circuitry devices. The quality control apparatus 200 may further comprise a transceiver 206. The quality control apparatus 200 may further comprise a memory 208. The circuitry 202 being communicatively connected to the transceiver 206 and/or the memory 208. The circuitry 202 may comprise a data bus, and the circuitry 202 may communicate with the transceiver 206 and/or the memory 208 via the data bus.

The circuitry 202 is configured to carry out overall control of functions and operations of the quality control apparatus 200. The circuitry 202 may include a processor 204, such as a central processing unit, CPU, microcontroller, or microprocessor. The processor 204 may be configured to execute program code stored in the memory 208, in order to carry out functions and operations of the quality control apparatus 200.

The transceiver 206 may be configured to enable the quality control apparatus 200 to communicate with other devices or apparatuses. For example, the quality control apparatus 200 may be communicatively connected to a control system of the specific packaging machine 104, e.g. by the transceiver 206. In another example, the quality control device 200 may be communicatively connected to an image capturing device, e.g. by the transceiver 206. The transceiver 206 may both transmit data from and receive data to the quality control apparatus 200. The transceiver 206 may communicate over wired or wireless communication protocols, e.g. Bluetooth, Wi-Fi, cellular communication etc..

The memory 208 may be a non-transitory computer-readable storage medium. The memory 208 may comprise one or more of a buffer, a flash memory, a hard drive, a removable media, a volatile memory, a non-volatile memory, a random access memory RAM, or another suitable device. In a typical arrangement, the memory 208 may include a non-volatile memory for long term data storage and a volatile memory that functions as system memory for the quality control apparatus 200. The memory 208 may exchange data with the circuitry 202 over the data bus. Accompanying control lines and an address bus between the memory 208 and the circuitry 202 also may be present.

The memory 208 is storing a pre-trained machine learning model 210. The machine learning model may be implemented as a convolutional neural network. Alternatively, or in combination, to storing the pre-trained machine learning model 210 in the memory 208 of the quality control apparatus 200, the pre-trained machine learning model may be provided in a remote server, such as in the cloud. The pre-trained machine learning model 210 being trained to recognize packages produced in the generic packaging machine of the certain model to pass a quality control. As discussed above, the generic packaging machine is typically a packaging machine being installed at a test site operated by the manufacturer of packaging machines of that certain model. The training of the pre-trained machine learning model 210 to recognize packages passing the quality control is typically made using training images comprising images depicting packages and/or portions of packages being produced by the generic packaging machine of the certain model and being classified as passing the quality control. Such classifying of passing the quality control is typically performed by a user group comprising one or more expert users of the packaging machine 104 of the certain model. Hence, the quality control is typically performed by one or more humans. The pre-trained machine learning model 210 is further being trained to recognize a number of known defects on packages produced in the generic packaging machine of the certain model. The training of the pre-trained machine learning model 210 to recognize known defects on packages is typically made using training images comprising images depicting packages and/or portions of packages being produced by the generic packaging machine of the certain model and exhibiting known defects. Each such known defect is typically classified by the user group comprising one or more expert users of the packaging machine 104 of the certain model.

Functions and operations of the quality control apparatus 200 may be implemented in the form of executable logic routines, e.g., lines of code, software programs, etc., that are stored on a non-transitory computer readable recording medium, e.g., the memory 208, of the quality control apparatus 200 and are executed by the circuitry 202, e.g. using the processor 204. Put differently, when it is stated that the circuitry 202 is configured to perform a specific operation, or execute a specific function, the processor 204 of the circuitry 202 may be configured execute program code portions stored on the memory 208, wherein the stored program code portions correspond to the specific operation or function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 300 that will be discussed below in connection with Fig. 3. Also, while the described functions and operations may be implemented in software, such functionality may as well be carried out via dedicated hardware or firmware, or some combination of one or more of hardware, firmware, and software. The following operations may be performed by the quality control apparatus 200, and may be stored as functions on a non-transitory computer readable recording medium.

The circuitry 202 is configured to execute an image obtaining function 212. The image obtaining function 212 is configured to obtain images depicting packages produced in the specific packaging machine. Typically, the images are obtained from an image capturing device 106a-c arranged in connection with the packaging machine 104. Each obtained image is depicting at least a portion of a package produced by the packaging machine 104. The images typically depict a portion of the package which is relevant for the quality control to be performed of the package. In one example, the images may depict a longitudinal sealing of packages produced in a roll-fed packaging machines, such as the Tetra Brik^{™} system marketed by Tetra Pak^{™}. The longitudinal sealing is formed to merge two edge sections of the package material to form a tube. The tube can then be filled with food product and then closed up by a top and bottom transversal sealing. More specifically, the longitudinal sealing can be formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube. The longitudinal sealing can be critical part of ensuring food safety of the package. Images depicting the longitudinal sealing may be captured by the image capturing device 106b from the inside of the tube. In other words, the image capturing device can be arranged within the tube, as was discussed in connection with Fig. 1. Hence, the obtained images typically depicts a sealing of the package. The quality control apparatus 200 may hence be configured to perform a quality control of sealings, e.g. the longitudinal sealings, of packages produced by a roll-fed packaging machine 104. It is however understood that the package may be evaluated in any stage during the production process. Hence, the images may depict the package in an unformed state, e.g. as a web of packaging material, in a partly formed state, e.g. in a tubular form, or in a completely formed state, e.g. as a finished package. Moreover, the image data may depict other portions of the package as well, such as a sidewall, a top or a bottom of the package, or of the web of packaging material. The images may depict the entire package. The images may comprise a single image frame of the package. Alternatively, the images may comprise a series of image frames of the package. Put differently, the images may comprise a plurality of subsequent image frames. As an example, the images may comprise 20 to 40 image frames of the package. As discussed in more detail in connection with Fig. 1, the image capturing device 106a-c may be a camera configured to capture images of the package. Alternatively, the image capturing device 106a-c may comprise a plurality of cameras, where each camera may be configured to capture images of different portions of the package. In such case, the obtained images may comprise a plurality of images of the package captured by the plurality of cameras. The plurality of images may be merged to form a single image, before being inputted to a machine learning model. The obtaining function 210 may obtain the image data in response to sending an instruction signal to the image capturing device 106a-c to capture the images. Alternatively, the image capturing device 106a-c may be comprised in the quality control apparatus 200.

The circuitry 202 is configured to execute an irregularity identification function 214. The irregularity identification function 214 is configured to identify an irregularity on packages produced in the specific packaging machine 104. This by inputting the images into a machine learning model. An irregularity being a feature of the packages previously being unknown to the machine learning model. Such an unknown feature may be a true defect, i.e. a defect of the package classifying the package as not passing a quality control, or a feature that is acceptable, i.e. passing the quality control. By a feature being unknown to the machine learning model is herein meant that the machine learning model has a confidence score below a threshold for recognizing the feature. According to one example, in case the confidence score is a scale of 0-100, if the confidence score for a feature is ≤70, it is determined that an irregularity is found. However, the threshold may be set at a higher confidence score, e.g. within a range of ≤70 - ≤90. According to another example, the threshold may be dynamic.

The machine learning model used for identifying irregularity on packages produced in the specific packaging machine 104 may be the pre-trained machine learning model 210. However, also a specific machine learning model 220, being discussed in more detail below, may be used for identifying irregularity on packages produced in the specific packaging machine 104. Which machine learning model to use depend on if the specific machine learning model 220 is available or not. In case of the obtained images depicts a longitudinal sealing of the packages, the detected irregularity is typically an irregularity of the longitudinal sealing.

The irregularity identification function 214 may further be configured to classify irregularities on packages into different types of irregularities. Hence, the irregularity identification function 214 may find a plurality of images of different packages exhibiting a same type of irregularity. The irregularity identification function 214 may aggregate a plurality of such images depicting packages exhibiting a specific type of irregularity into a group of images depicting a specific irregularity.

The circuitry 202 is further configured to execute an irregularity classifying function 216. The irregularity classifying function 216 is configured to classify a package exhibiting an irregularity as identified by the irregularity identification function 214 as either a package passing the quality control or a defect package. Such classification is typically obtained by sending a classifying task to a user group and receiving back a classifying result. The user group typically comprising one or more expert users of the packaging machine 104 of the certain model. Hence, the classifying is typically performed by one or more humans. The classifying result being either that a package with the irregularity is passing the quality control or that a package with the irregularity is a defect package. The classifying task may comprise one or more images of packages exhibiting a specific type of irregularity. Hence, the classifying may be performed based on images of one or more packages exhibiting a specific type of irregularity. The classifying task may further comprises one or more settings of the specific packaging machine of the certain model upon producing the packages with the specific type of irregularity. The classifying task may further comprises providing one or more physical sample packages to the user group.

The circuitry 202 is further configured to execute a fine-tuning function 218. The fine-tuning function 218 is configured to fine-tune the pre-trained machine learning model 210 to additionally recognize packages produced in the specific packaging machine of the certain model and exhibiting the specific type of irregularity identified by the irregularity identification function 214 as either being a package passing the quality control or being a defect package depending on the result from the irregularity classifying function 216. Thereby a specific machine learning model 220 specific to the specific packaging machine is generated. The specific machine learning model may then be used for quality control of packages produced in specific packaging machine of the certain model. The specific machine learning model 220 is also stored in the memory 208 of the quality control apparatus 200.

The circuitry 202 is further configured to execute a quality control function 222. The quality control function 222 is configured to perform quality control on packages produced by the specific packaging machine of the certain model using the specific machine learning model 220.

Fig. 3 is a flow chart illustrating the steps of a method 300 for generating a specific machine learning model configured to perform a quality control of packages produced in a specific packaging machine of a specific model. The method 300 is computer implemented. The packages may be carton based packages containing food products. The packages may comprise a carton layer and at least one plastic layer. The packaging machine may be a roll-fed packaging machine. However, as discussed above, the specific machine learning model may be generated also for other types of packaging machines. Fig. 3 is a flow chart illustrating the steps of the method 300. Below, the different steps is described in more detail. Even though illustrated in a specific order, the steps of the method 300 may be performed in any suitable order, in parallel, as well as multiple times. Some of the steps, or even all steps, of the method 300 may be executed by the quality control apparatus 200 discussed above. However, at least some of the steps may be executed at another apparatus such as a remote server.

Typically the generated specific machine learning model is implemented in a quality control apparatus such as the quality control apparatus of Fig. 2, the machine learning model being a specific machine learning model being configured to take part in performing the quality control of packages produced in a packaging machine, e.g. the packaging machine 104 of the food production system 100 of Fig. 1.

One or more images depicting at least a portion of a package is obtained S302, from an image capturing device 106a-c. The package herein refers to a package being produced or which has been produced in a specific packaging machine 104 of a certain model. The package may thus be evaluated in any stage during the production process. Hence, the images may depict the package in an unformed state (e.g. as a web of packaging material), in a partly formed state (e.g. in a tubular form), or in a completely formed state (e.g. as a finished package).

The images may depict a portion of the package which is relevant for a computer based quality control to be performed of the package. In one example, the images may depict a longitudinal sealing of the package. However, the images may depict other portions of the package as well, such as a sidewall, a top or a bottom of the package, or of the web of packaging material. The images may depict the entire package. The images may comprise a single image frame of the package. Alternatively, the images may comprise a series of image frames of the package. Put differently, the images may comprise a plurality of subsequent image frames. As an example, the images may comprise 20 to 40 image frames of the package.

The obtaining S302 may be made by receiving one or more images from a single image capturing device 106a-c. Alternatively, the obtaining S302 may be made by receiving images from a plurality of image capturing device 106a-c, where each image capturing device 106a-c is configured to capture images of different portions of the package. The plurality of images may be merged to form a single image, before being used in a subsequent step of the method 300.

Moving on, identifying S304 an irregularity of a specific type on packages produced in the specific packaging machine of the certain model is performed. The identifying S304 is made by inputting the images into a machine learning model being trained to recognize packages produced in a packaging machine of the certain model. The machine learning model used for identifying irregularity on packages produced in the specific packaging machine 104 may be the pre-trained machine learning model 210. However, also the specific machine learning model 220, may be used for identifying irregularity on packages produced in the specific packaging machine 104. Which machine learning model to use depend on if the specific machine learning model 220 is available or not. An irregularity being a feature of the packages previously being unknown to the machine learning model. Such an unknown feature may be a true defect, i.e. a defect of the package classifying the package as not passing a quality control, or an feature that is acceptable, i.e. passing the quality control. By a feature being unknown to the machine learning model is herein meant that the machine learning model has a confidence score below a threshold for recognizing the feature. According to one example, in case the confidence score is a scale of 0-100, if the confidence score for a feature is ≤70, it is determined that an irregularity is found. However, the threshold may be set at a higher confidence score, e.g. within a range of ≤70 - ≤90. According to another example, the threshold may be dynamic.

As one example, the identifying S304 is made by inputting the images into the pre-trained machine learning model 210 being trained to recognize packages produced in a generic packaging machine of the certain model to pass a quality control and to recognize a number of known defects on packages. The pre-trained machine learning model and how it may be trained is discussed in more detail above, in order to avoid undue repetition reference is made to this discussion. Upon, the identifying S304 is made by inputting the images into the pre-trained machine learning model 210 an irregularity of a first type may be identified.

Further, upon the specific machine learning model 220 being available the identifying S304 may be made by inputting the images into the specific machine learning model 220. Upon, the identifying S304 is made by inputting the images into the specific machine learning model 220 an irregularity of a second type, different from the first type may be identified. Each time an irregularity of a new type is identified, the result from classifying such irregularity, see steps S306 below, may be used to fine-tune the pre-trained machine learning model 210 or an already generated specific machine learning model 220 to also recognize packages exhibiting such a new type of irregularity, see step S308 below.

Moving in, a classification of a package exhibiting the first type of irregularity is obtained S306. The obtained classification is either a package passing the quality control or a defect package. Such classification is typically obtained S306 by sending a classifying task to a user group and receiving back a classifying result. The user group typically comprising one or more expert users of the packaging machine 104 of the certain model. Hence, the classifying is typically performed by one or more humans. The classifying result being either that a package with the irregularity is passing the quality control or that a package with the irregularity is a defect package. The classifying task may comprise one or more images of packages exhibiting a specific type of irregularity. Hence, the classifying may be performed based on images of one or more packages exhibiting a specific type of irregularity. The classifying task may further comprises one or more settings of the specific packaging machine of the certain model upon producing the packages with the specific type of irregularity. The classifying task may further comprises providing one or more physical sample packages to the user group.

Moving on, fine-tuning S308 of the machine learning model is performed. The finetuning is made such that machine learning model (either the pre-trained machine learning model or a specific machine learning model) is trained to additionally recognize packages produced in the specific packaging machine and exhibiting the new type of irregularity found in the identifying step S304 as either being a package passing the quality control or being a defect package depending on the result from the classification in the step of obtaining S306 a classification of a package exhibiting the first type of irregularity. By the fine-tuning S308 generation of a specific machine learning model additionally recognizing packages produced in the specific packaging machine and exhibiting the new type of irregularity is performed. Such a specific machine learning model 220 is specific to the specific packaging machine. That is, the specific machine learning model 220 may recognize irregularity/irregularities specific to the specific packaging machine. Such irregularity/irregularities specific to the specific packaging machine may occur due to specific circumstance at the site in which the specific packaging machine is installed.

The specific machine learning model 220 may then be used for machine based quality control S310 of packages produced in the specific packaging machine of the certain model.

The method 300 may be reiterated for finetuning the machine learning model to additionally recognize packages produced in the specific packaging machine and exhibiting a newly found specific type of irregularity.

It should be noted that features, aspects and advantages of the quality control apparatus 200 as described above in connection with Fig. 2, are applicable also to the method 300 for generating a specific machine learning model configured to perform a quality control of packages produced in a specific packaging machine of a certain model described herein. To avoid undue repetition, reference is made to the above.

Additionally, variations to the disclosed variants can be understood and effected by the skilled person in practicing the claimed invention, from a study of the drawings, the disclosure, and the appended claims.

## Claims

1. A quality control apparatus (200) for quality control of packages produced in specific packaging machine (104) of a certain model, the quality control apparatus comprising:
a memory (208) storing a pre-trained machine learning model (210) being trained to recognize packages produced in a generic packaging machine of the certain model to pass a quality control and to recognize a number of known defects on packages produced in the generic packaging machine; and
circuitry (202) configured to execute:
an image obtaining function (212) configured to, from an image capturing device (106a-c), obtain images depicting packages produced in the specific packaging machine;
an irregularity identification function (214) configured to identify an irregularity on packages produced in the specific packaging machine, by inputting the images into the pre-trained machine learning model;
an irregularity classifying function (216) configured to classify a package exhibiting the irregularity as either a package passing the quality control or a defect package;
a fine-tuning function (218) configured to fine-tune the pre-trained machine learning model to additionally recognize packages produced in the specific packaging machine of the certain model and exhibiting the irregularity as either being a package passing the quality control or being a defect package depending on a result from the irregularity classifying function (216), thereby generating a specific machine learning model (220) specific to the specific packaging machine of the certain model to be used for quality control of packages produced in the specific packaging machine; and
a quality control function (222) configured to perform quality control on packages produced by the specific packaging machine using the specific machine learning model.

2. The quality control apparatus according to claim 1, wherein the irregularity classifying function (216) is configured to generate a classifying task to be sent to a user group and to receive a classifying result from the user group.

3. The quality control apparatus according to claim 2, wherein the classifying task comprises one or more images of packages with the first type of irregularity.

4. The quality control apparatus according to claim 3, wherein the classifying task further comprises one or more settings of the specific packaging machine upon producing the packages with the first type of irregularity.

5. The quality control apparatus according to claim 3, wherein the irregularity identification function (214) is further configured to aggregate a plurality of images depicting packages exhibiting the first type of irregularity into a first group of images, and wherein the irregularity classifying function (216) is configured to generate the classifying task comprising the first group of images.

6. The quality control apparatus according to claim 1, wherein the irregularity identification function (214) is further configured to aggregate a plurality of images depicting packages exhibiting the first type of irregularity into a first group of images, and wherein the fine-tuning function (218) is configured to fine-tune the pre-trained machine learning model using the first group of images.

7. A food production system (100) comprising:
a specific packaging machine (104) of a certain model configured to produce packages (110);
an image capturing device (106a-c) configured to capture images depicting at least a portion of packages produced in the specific packaging machine; and
a quality control apparatus (200) according to any one of claims 1-6.

8. A computer implemented method for generating a specific machine learning model (220) configured to perform a quality control of packages (110) produced in a specific packaging machine of a certain model, the method comprising:
obtaining (S302), from an image capturing device (106a-c), images depicting packages produced in the specific packaging machine of the certain model;
identifying (S304) a first type of irregularity on packages produced in the specific packaging machine of the certain model, by inputting the images into a pre-trained machine learning model (210) being trained to recognize packages produced in a generic packaging machine of the certain model to pass a quality control and to recognize a number of known defects on packages;
obtaining (S306) a classification of a package exhibiting the first type of irregularity as either a package passing the quality control or a defect package; and
finetuning (S308) the pre-trained machine learning model to additionally recognize packages produced in the specific packaging machine and exhibiting the first type of irregularity as either being a package passing the quality control or being a defect package depending on the result from the classification, thereby generating the specific machine learning model.

9. The method according to claim 8, wherein the obtaining a classification is performed by sending a classifying task to a user group and receiving a classifying result from the user group.

10. The method according to claim 9, wherein the classifying task comprises one or more images of packages with the first type of irregularity.

11. The method according to claim 10, wherein the classifying task further comprises one or more settings of the specific packaging machine upon producing the packages with the first type of irregularity.

12. The method according to claim 8, further comprising aggregating a plurality of images depicting packages exhibiting the first type of irregularity into a first group of images, wherein the classifying and training are performed using the first group of images.

13. The method according to claim 8, further comprising, subsequently to the finetuning the pre-trained machine learning model to additionally recognize packages produced in the specific packaging machine and exhibiting the first type of irregularity:
obtaining, from the image capturing device, additional images depicting packages produced in the specific packaging machine of the certain model;
identifying a second type of irregularity on packages produced in the specific packaging machine, by inputting the additional images into the specific machine learning model;
obtaining a classification of a package exhibiting the second type of irregularity as either a package passing the quality control or a defect package; and
finetuning the specific machine learning model to additionally recognize packages produced in the specific packaging machine and exhibiting the second type of irregularity as either being a package passing the quality control or being a defect package depending on the result from the classifying, thereby updating the specific machine learning model.

14. A non-transitory computer-readable storage medium storing one or more programs configured to be executed by one or more processors of a processing system, the one or more programs comprising instructions for performing the method according to any one of claims 8-13.
